(19) **Europäisches Patentamt**
**European Patent Office**
**Office européen des brevets**

(11) **EP 2 406 661 B1**

(12) **FASCICULE DE BREVET EUROPEEN**

(45) Date de publication et mention
de la délivrance du brevet:
**29.05.2013 Bulletin 2013/22**

(51) Int Cl.:
**G01S 19/43** (2010.01)　　**G01S 19/44** (2010.01)
**G01S 19/04** (2010.01)

(21) Numéro de dépôt: **10708531.8**

(22) Date de dépôt: **11.03.2010**

(86) Numéro de dépôt international:
**PCT/EP2010/053129**

(87) Numéro de publication internationale:
**WO 2010/103082 (16.09.2010 Gazette 2010/37)**

(54) **PROCEDE DE GEOPOSITIONNEMENT UTILISANT DES DONNEES D'ASSISTANCE**

GEOPOSITIONIERUNGSVERFAHREN UNTER VERWENDUNG VON HILFSDATEN

GEOPOSITIONING METHOD USING ASSISTANCE DATA

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **13.03.2009 FR 0951611**

(43) Date de publication de la demande:
**18.01.2012 Bulletin 2012/03**

(73) Titulaire: **Centre National d'Etudes Spatiales
75039 Paris (FR)**

(72) Inventeurs:
• **LAURICHESSE, Denis**
**F-31170 Tournefeuille (FR)**
• **MERCIER, Flavien**
**F-31320 Auzeville (FR)**

(74) Mandataire: **Bruck, Mathis
Office Ernest T. Freylinger S.A.
BP 48
8001 Strassen (LU)**

(56) Documents cités:
**FR-A- 2 914 430**

• **LAURICHESSE D ET AL: "Real Time Zero-difference Ambiguities Fixing and Absolute RTK" PROC. OF THE 2008 NATIONAL TECHNICAL MEETING OF THE ION, SAN DIEGO, CA, USA, 28 janvier 2008 (2008-01-28), pages 747-754, XP002532442**
• **KONGZHE CHEN AND YANG GAO: "Real-Time Precise Point Positioning Using Single Frequency Data" PROCEEDINGS OF ION GNSS 2005, 13 septembre 2005 (2005-09-13), pages 1514-1523, XP002561472 Long Beach, CA, USA**
• **P. HÉROUX ET AL.: "Products and Applications for Precise Point Positioning - Moving Towards Real-Time" PROCEEDINGS OF ION GNSS 2004, 21 septembre 2004 (2004-09-21), pages 1832-1843, XP002561473 Long Beach, CA , USA**

**Description**

**Domaine technique**

La présente invention concerne le domaine de la radionavigation ou de positionnement par satellite, en particulier un procédé de géopositionnement qui utilise des données d'assistance calculées à l'aide d'un réseau de récepteurs de référence. L'invention concerne en outre un procédé pour calculer les données d'assistance requises. Le champ d'application de l'invention est notamment la réception de signaux de radionavigation émis par des émetteurs d'un système de positionnement par satellite, p+. ex. GPS (de l'anglais « Global Positioning System), Galileo, Glonass, QZSS, Compass, IRNSS, etc.

**Etat de la technique**

De manière générale, les signaux de radionavigation émis par des satellites (ou pseudolites) d'un système de positionnement se présentent sous la forme d'une porteuse modulée par une forme d'onde d'étalement contenant un code binaire pseudo-aléatoire. La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Accessoirement, certains signaux de positionnement par satellites peuvent aussi transporter des données utiles (p. ex. le message de navigation) sous forme d'une séquence binaire (à rythme nettement moins élevé que le code pseudo-aléatoire) modulée en plus sur la porteuse.
Dans le cas de GPS, les signaux de radionavigation sont transmis dans les bandes de fréquences L1, centrée sur 1575,42 MHz et L2, centrée sur 1227,6 MHz. Au cours de la modernisation de GPS, la bande L5, centrée sur 1176,45 MHz sera ajoutée. Les satellites de la constellation Galileo transmettront dans les bandes E2-L1-E1 (la portion de bande médiane L1 étant la même que celle du GPS), E5a (qui, selon la nomenclature Galileo, représente la bande L5 prévue pour le GPS), E5b (centrée sur 1207,14 MHz) et E6 (centrée sur 1278,75 MHz). Notons que les satellites de la constellation Compass transmettent ou transmettront dans la bande B1 (centrée sur 1561,098 MHz), B1-2 (centrée sur 1589,742 MHz), L1 (centrée sur 1575,42 MHz), B2 (centrée sur 1207,14 MHz), et B3 (centrée sur 1268,52 MHz). Les fréquences centrales représentent les fréquences des porteuses des différents signaux.
La réception d'un signal de radionavigation comprend normalement une première démodulation à l'aide d'une réplique interne de la porteuse générée dans le récepteur par un oscillateur piloté par une boucle de poursuite de porteuse et une seconde démodulation à l'aide d'une réplique interne de la forme d'onde d'étalement produite par un générateur de forme d'onde piloté par une boucle de poursuite de forme d'onde d'étalement (appelée aussi « boucle de poursuite de code »). Les signaux d'asservissement des boucles de poursuite de porteuse et de forme d'onde d'étalement sont utilisés par le récepteur pour déterminer sa position. Le signal d'écart de phase entre la porteuse du signal reçu et la réplique interne de porteuse produit à chaque pas de temps par la boucle de poursuite de porteuse fournit une première observable (l'observable ou mesure de phase). Le signal de décalage temporel entre la forme d'onde d'étalement du signal reçu et la réplique interne de forme d'onde d'étalement produit à chaque pas de temps par la boucle de poursuite de forme d'onde d'étalement représente une deuxième observable (l'observable ou mesure de code).
Les mesures élémentaires que peut effectuer un récepteur comprennent donc les mesures de code et les mesures de phase de porteuse. Ces mesures élémentaires peuvent évidemment être combinées entre elles. Les mesures de code sont d'une précision métrique tandis que les mesures de phase sont d'une précision de quelques mm. Or les mesures de phase présentent le désavantage qu'elles ne livrent que la partie réelle de la différence de phase de la porteuse entre l'émission par le satellite et le récepteur. Les mesures de phase sont donc ambiguës dans le sens que le nombre de cycles entiers entre l'émetteur (le satellite) et le récepteur est inconnu au départ. Afin de pouvoir bénéficier de la précision des mesures de phase, un récepteur doit résoudre les ambiguïtés dont elles sont entachées.
La résolution des ambiguïtés de phase est couramment effectuée par différentiation des mesures de phase (simple ou double différentiation). Cette différentiation permet d'éliminer des causes d'erreur (non modélisées) communes à plusieurs mesures, et permet ainsi de faire apparaître une information entière, dont la prise en compte améliore encore les performances. Cependant, cette information entière consiste en des différences d'une ou plusieurs ambiguïtés de phase élémentaires et ne permet pas, en général, de remonter aux ambiguïtés de phase élémentaires.
La demande de brevet FR 2 914 430 décrit un procédé qui permet de résoudre, de manière cohérente, les ambiguïtés de phase sur un réseau de récepteurs de référence à l'aide d'observations bi-fréquence (c.-à-d. des mesures de code et de phase sur au moins deux fréquences distinctes). En parallèle, ce procédé produit un jeu d'horloges de satellite qui peuvent être utilisées en tant que données d'assistance par un récepteur bi-fréquence extérieur au réseau (p.ex. celui d'un utilisateur qui désire connaître sa position). Ces horloges ont la propriété particulière de mettre en évidence des ambiguïtés de phase entières lors de la résolution des équations de positionnement obtenues par des mesures « élémentaires », c.-à-d. différentiées ni entre satellites ni entre récepteurs. L'inconvénient du procédé de la demande FR 2 914 430 est qu'il ne peut être appliqué que par des récepteurs bi-fréquence. L'article « Real-time Precise Point Positioning Using Single Frequency Data », par K. Chen et Y. Gao (Ion GNSS 18th International Technical Meeting of the Satellite Division, 13-15 September 2005, Long Beach, CA) évalue et compare plusieurs méthodes pour mitiger l'effet ionosphérique. L'article mentionne, entre autres, une méthode pour éliminer la contribution ionosphérique à l'aide de la combinaison de glissement code porteuse (ou combinaison GRAPHIC). Cette méthode a été précédemment décrite par P. Héroux et autres dans l'article « Products and Applicationsfor Precise Point Positioning - Moving Towards Real-Time » (ION GNSS 17th International Technical Meeting of the Satellite Division, 21-24September 2004, Long Beach, CA).

## Objet de l'invention

Un premier volet de la présente invention a comme objet de proposer un procédé de géopositionnement qui permet à un récepteur de lever ses ambiguïtés de phase sans nécessairement avoir recours à des observations multi-fréquence. Un second volet de l'invention a comme objet de proposer un procédé pour déterminer les données d'assistance requises pour un tel procédé de géopositionnement.

## Description générale de l'invention

De manière générale, l'invention comprend deux volets. D'une part, elle comprend un procédé se déroulant au niveau d'un réseau de récepteurs (stations) de référence lors duquel sont déterminées des informations supplémentaires (données d'assistance) à l'aide desquelles un récepteur d'utilisateur ne faisant pas partie du réseau peut résoudre les ambiguïtés de phase. D'autre part, l'invention comprend le procédé se déroulant au niveau d'un récepteur ne faisant pas nécessairement partie du réseau qui utilise les informations supplémentaires élaborées à l'aide du réseau de stations de référence et mises à disposition par une voie de communication quelconque.

Par souci de clarté, le procédé de détermination de données d'assistance est traité en premier. Dans ce qui suit, on supposera que les signaux de radionavigation proviennent d'un ensemble de satellites de radionavigation, dont chacun diffuse au moins un premier signal de radionavigation sur une première fréquence et un deuxième signal de radionavigation sur une deuxième fréquence distincte de la première.

Le procédé de détermination de données d'assistance comprend les actions de :

o recevoir des mesures de code et de phase (élémentaires, c.-à-d. différentiées ni entre récepteurs ni entre satellites) des signaux de radionavigation réalisées par des récepteurs d'un réseau de référence ; lesdites mesures de phase présentant chacune une ambiguïté d'un nombre entier de cycles a priori inconnue ;

o résoudre les ambiguïtés des mesures de phase sur la première fréquence de manière cohérente sur l'ensemble des satellites et des récepteurs de référence ;

o déduire un ensemble de valeurs d'horloge émetteur iono-free de phase découlant de la résolution cohérente des ambiguïtés et un ensemble de valeurs d'horloge récepteur iono-free de phase découlant de la résolution cohérente des ambiguïtés ;

o calculer, pour chaque couple satellite - récepteur de référence, une valeur de combinaison de glissement de code porteuse à partir de la mesure de code et de la mesure de phase réalisée sur la première fréquence dans ce récepteur de référence et pour ce satellite, et retrancher de cette valeur la contribution géométrique, la contribution des valeurs d'horloge récepteur iono-free de phase et d'horloge émetteur iono-free de phase ainsi que la contribution de l'ambiguïté de la mesure de phase résolue, ceci résultant dans un résidu de mesure ;

o séparer de manière cohérente sur l'ensemble des satellites et des récepteurs du réseau chacun des résidus de mesure obtenus en une partie émetteur et une partie récepteur ; et

o lisser la partie émetteur desdits résidus de mesure.

De préférence, les valeurs d'horloge émetteur iono-free associées à la résolution cohérente des ambiguïtés ainsi que les parties émetteur lissées des résidus de mesure sont mises à disposition de récepteurs extérieurs au réseau comme données d'assistance.

Selon un mode de réalisation préféré de l'invention, le procédé comprend, pour chaque satellite de l'ensemble de satellites, l'action de calculer une valeur d'horloge émetteur associée à la combinaison de glissement code porteuse comme somme de la valeur d'horloge émetteur iono-free et du résidu de mesure lissé.

De préférence, les valeurs d'horloge émetteur associée à la combinaison de glissement code porteuse sont mises à disposition de récepteurs extérieurs au réseau comme données d'assistance, p.ex. par une voie de télécommunication, comme l'Internet, la diffusion terrestre ou par satellite, etc.

Le lissage des parties émetteur desdits résidus de mesure peut être réalisé à chaque fois par ajustage d'une fonction sinus d'une période de 12 heures sur la partie émetteur à lisser. Ceci pourra se faire notamment par une méthode des moindres carrés.

Avantageusement, le procédé de détermination de données d'assistance est implémenté dans un produit de programme d'ordinateur comprenant des moyens de support (mémoire d'ordinateur, disque dur, ondes radio ou optiques, etc.) portant un code de programme d'ordinateur configuré pour mettre en oeuvre le procédé lorsque le programme est exécuté sur un ordinateur.

En ce qui concerne le premier volet de l'invention, un procédé de géopositionnement comprend, au niveau d'un récepteur de signaux de radionavigation, les actions de :

o recevoir, pour chaque satellite dudit ensemble et visible depuis ledit récepteur, au moins ledit premier signal de radionavigation ;

o effectuer, pour chaque satellite visible, des mesures de code et de phase (élémentaires, c.-à-d. différentiées ni entre récepteurs ni entre satellites) du premier signal de radionavigation reçu ; lesdites mesures de phase présentant une ambiguïté d'un nombre entier de cycles a priori inconnue ;

o recevoir un ensemble de données d'assistance, celui-ci comprenant, pour chaque satellite de l'ensemble de satellites, des données suffisantes pour reconstituer la valeur d'horloge émetteur associée à la combinaison de glissement code porteuse, déduite de manière cohérente sur l'ensemble de satellites et de récepteurs d'un réseau de référence;

o calculer, pour chaque satellite, une valeur de combinaison de glissement de code porteuse à partir de la mesure de code et de la mesure de phase du premier signal de radionavigation, et retrancher de cette valeur de combinaison de glissement de code porteuse la valeur d'horloge émetteur associée à la combinaison de glissement code porteuse, de sorte à ainsi obtenir une observable de glissement code porteuse non-ambiguë ; et

o déterminer la position du récepteur à l'aide des observables de glissement code porteuse non-ambiguës.

Les données suffisantes pour reconstituer la valeur d'horloge émetteur associée à la combinaison de glissement code porteuse comprennent de préférence la valeur d'horloge de satellite associée à la combinaison de glissement code porteuse elle-même. Alternativement, les données suffisantes pour reconstituer la valeur d'horloge émetteur associée à la combinaison de glissement code porteuse peuvent comprendre les valeurs d'horloge émetteur iono-free de phase associées à la résolution cohérente des ambiguïtés ainsi que les parties émetteur lissées desdits résidus de mesure obtenues par un procédé comme exposé ci-dessus.

Les procédés selon l'invention sont considérés comme avantageux notamment pour la bande de fréquence L5 (la première fréquence étant dans ce cas 1176,45 MHz). Alternativement, la première fréquence pourrait être 1575,42 MHz, 1227,6 MHz, 1207,14 MHz, 1278,75 MHz, 1561,098 MHz, 1589,742 MHz, 1207,14 MHz ou 1268,52 MHz.

Avantageusement, le procédé de géopositionnement est implémenté dans un produit de programme d'ordinateur comprenant des moyens de support (mémoire d'ordinateur, disque dur, ondes radio ou optiques, etc.) portant un code de programme d'ordinateur configuré pour mettre en oeuvre le procédé.

De préférence, le procédé de géopositionnement est implémenté dans un dispositif de géopositionnement par satellite, communément appelé « récepteur GNSS (de l'anglais « Global Navigation Satellite System »).

Le procédé de géopositionnement peut être implémenté en tant que procédé a postériori ou en tant que procédé en temps réel.

## Brève description des dessins

D'autres particularités et caractéristiques de l'invention ressortiront de la description détaillée d'un mode de réalisation avantageux présenté ci-dessous, à titre d'illustration, avec référence aux dessins annexés. Ceux-ci montrent:

Fig. 1: une illustration schématique d'un réseau de récepteurs de référence ;

Fig. 2: un ordinogramme d'un procédé de détermination de données d'assistance ;

Fig. 3: un ordinogramme d'un procédé de géopositionnement utilisant les données d'assistance qui peuvent être déterminées dans le procédé de la figure 2 ;

Fig. 4: une représentation graphique de la partie émetteur de deux résidus de mesure obtenus chacun par le fait de retrancher d'une mesure de glissement de code porteuse la contribution géométrique (modélisée), la contribution des valeurs d'horloge récepteur et émetteur iono-free de phase ainsi que la contribution de l'ambiguïté de la mesure de phase ;

Fig. 5: une représentation graphique de la partie émetteur de deux résidus de mesure de la figure 4 après lissage.

## Description d'une exécution préférée

Un récepteur de signaux de radionavigation peut réaliser des mesures de code (non ambiguës) et des mesures de phase (ambiguës d'un nombre entier de cycles) sur les signaux de radionavigation qu'il reçoit des différents satellites en visibilité (c.-à-d. au-dessus de l'horizon). Un récepteur multi-fréquence peut effectuer ces mesures sur au moins deux fréquences $f_1$ et $f_2$ distinctes. En supposant un récepteur bi-fréquence, on a donc, pour chaque satellite en visibilité et à chaque pas de temps, deux mesures de code, notées $P_1$ et $P_2$, et deux mesures de phase, notées $L_1$ et $L_2$, sur les fréquences $f_1$ et $f_2$. A chaque pas de temps ($t_k$), on obtient donc, dans un récepteur, un jeu de mesures de code $P_1^j(t_k)$, $P_2^j(t_k)$, $L_1^j(t_k)$ et $L_2^j(t_k)$, où l'indice supérieur (j) indique le satellite dont le signal provient au récepteur. Comme les satellites orbitent autour de la Terre, seulement une partie d'entre eux est visible à un moment donné depuis le lieu du récepteur. Pour faciliter la notation, la dépendance du temps et l'indice de satellite ne seront pas toujours indiqués explicitement dans ce qui suit.
On utilisera les notations suivantes :

$$\gamma = \frac{f_1^2}{f_2^2}, \quad \lambda_1 = \frac{c}{f_1}, \quad \lambda_2 = \frac{c}{f_2}$$

où c représente la vitesse de la lumière. Pour les bandes L1 et L2 du système GPS, on a, par exemple : $f_1 = 154\,f_0$ et $f_2 = 120\,f_0$, où $f_0 = 10{,}23$ MHz. Par convention, les mesures de code $P_1$, $P_2$ sont exprimées en unités de longueur, tandis que les mesures de phase $L_1$, $L_2$ sont exprimées en cycles.
Les mesures de code et de phase remplissent les équations (mesures à gauche, paramètres du modèle à droite) suivantes :

$$\begin{aligned}
P_1 &= D_1 + e + \Delta H_{p,1} \\
P_2 &= D_2 + \gamma e + \Delta H_{p,2} \\
\lambda_1 L_1 &= D_1 + \lambda_1 W - e + \Delta H_1 - \lambda_1 N_1 \\
\lambda_2 L_2 &= D_2 + \lambda_2 W - \gamma e + \Delta H_2 - \lambda_2 N_2
\end{aligned} \qquad (E1)$$

- $D_1$ représente la distance de propagation entre les centres de phase du satellite et du récepteur pour la fréquence $f_1$, incluant l'élongation troposphérique, effets relativistes, etc. - $D_2$ est la quantité analogue pour la fréquence $f_2$ ;
- e est le terme d'allongement ionosphérique qui varie en fonction du carré de la fréquence et qui intervient avec un signe opposé entre la mesure de code et la mesure de phase ;
- $N_1$ et $N_2$ représentent les ambiguïtés de phase (entières) des deux porteuses ;
- W représente la contribution de l'effet « wind-up » en cycles ; et
- $\Delta H_{p,1}$, $\Delta H_{p,2}$, $\Delta H_1$, $\Delta H_2$ sont les différences entre l'horloge du récepteur et l'horloge de l'émetteur pour les différentes mesures.

Evidemment, un récepteur mono-fréquence ne peut réaliser qu'une seule mesure de code et une seule mesure de phase par satellite et pas de temps. Sans perte de généralité, on peut admettre que ces mesures sont $P_1$ et $L_1$ (au lieu de $P_2$ et $L_2$).

On appelle combinaison « iono-free » de code et on note $P_c$ la combinaison des mesures de code qui élimine la contribution ionosphérique :

$$P_c = \frac{\gamma P_1 - P_2}{\gamma - 1} = \frac{\gamma D_1 - D_2}{\gamma - 1} + \frac{\gamma \Delta H_{p,1} - \Delta H_{p,2}}{\gamma - 1} \qquad \text{(E2)}$$

Une combinaison « iono-free » de phase (ambiguë) peut être définie de manière analogue. L'intérêt de travailler avec des combinaisons « iono-free » réside principalement dans le fait que l'ionosphère est une source d'erreur relativement mal connue dans le sens où la contribution ionosphérique est difficilement modélisable avec une bonne précision. Or les combinaisons « iono-free » de code et de phase ne sont disponibles que dans un récepteur au moins bi-fréquence.

Dans un récepteur mono-fréquence, il est cependant possible d'éliminer la contribution ionosphérique à l'aide des mesures sur la fréquence unique, grâce à la combinaison, notée ci-après $P_e$, dite « de glissement de code porteuse » (aussi appelée combinaison GRAPHIC, ce qui est l'acronyme du terme anglais « GRoup And PHase Ionospheric Correction ») qui utilise la somme de la mesure de phase et de la mesure de code. Pour la fréquence $f_1$, cette combinaison peut s'écrire comme moyenne arithmétique de la mesure de code et de la mesure de phase :

$$P_e = \frac{P_1 + \lambda_1 L_1}{2} \qquad \text{(E3)}$$

On a donc:

$$P_e = D_1 + \frac{\lambda_1 W}{2} + \frac{\Delta H_{p,1} + \Delta H_1}{2} - \frac{\lambda_1 N_1}{2} \qquad \text{(E4)}$$

Le terme $\Delta\Theta = (\Delta H_{p,1} + \Delta H_1)/2$ correspond à la différence d'une horloge récepteur associée à la combinaison de glissement code porteuse (commune à tous les canaux du récepteur, notée $\Theta_{rec}$) et d'une horloge émetteur associée à la combinaison de glissement code porteuse (qui dépend du satellite, notée $\Theta_{eme}$). Cette horloge émetteur $\Theta_{eme}$ est a priori inconnue pour chaque satellite (pour chaque canal du récepteur), raison pour laquelle la combinaison de glissement code porteuse était jusqu'à présent de peu d'intérêt pratique dans le cas de mesures non différentiées entre satellites.

Le mérite des inventeurs est d'avoir reconnu que l'on peut estimer la partie émetteur du terme $\Delta\Theta$ de manière cohérente sur l'ensemble des satellites. Cette estimation se fait à l'aide d'un réseau de récepteurs de référence (ou de stations de référence). La partie émetteur $\Theta_{eme}$ de $\Delta\Theta$ peut être communiquée à d'autres récepteurs extérieurs au réseau en tant qu'information d'assistance. Grâce à cela, un récepteur extérieur au réseau peut décomposer le terme $\Delta\Theta$ en sa partie émetteur $\Theta_{eme}$ et sa partie récepteur $\Theta_{rec}$, commune à tous les canaux, et réduire ainsi de manière drastique le nombre d'inconnues dans le système d'équations de positionnement. Comme la partie émetteur $\Theta_{eme}$ de $\Delta\Theta$ est déterminée de manière cohérente sur l'ensemble des satellites, la solution du système d'équations de positionnement met en évidence les ambiguïtés entières des mesures de phase $N_1$ pour les différents canaux (c.-à-d. pour les différents satellites).

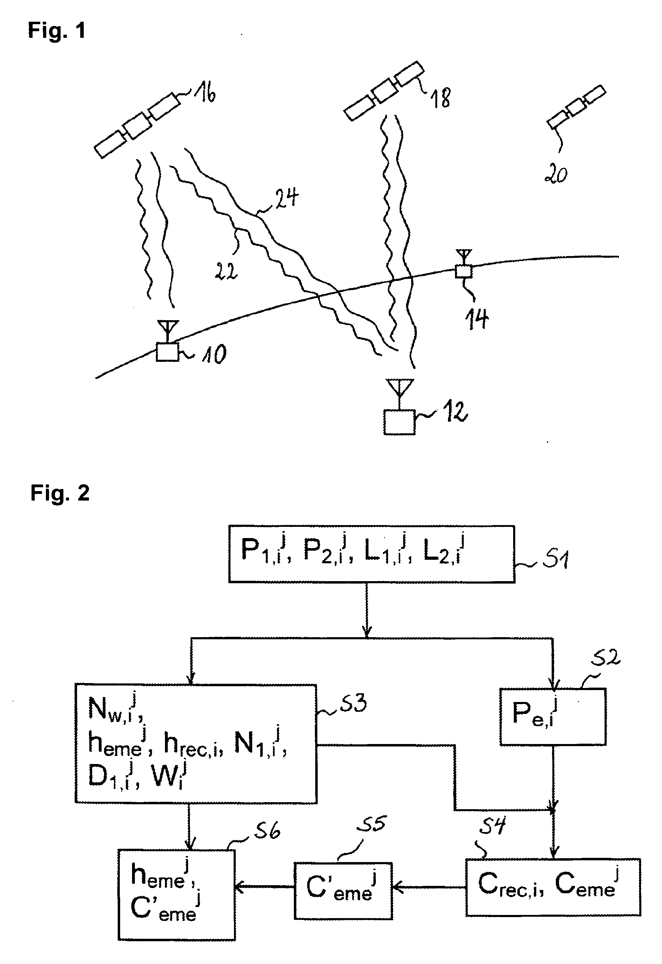

Nous allons maintenant décrire le procédé qui permet de déterminer les donnés d'assistance à l'aide d'un réseau de récepteurs de référence, dont une partie est schématiquement montrée en figure 1. Un ordinogramme de ce procédé se trouve en figure 2. Les récepteurs de référence 10, 12, 14 effectuent chacun des mesures de code (non ambiguës) et des mesures de phase (ambiguës) sur les signaux de radionavigation émis par les satellites de radionavigation 16, 18, 20. Chaque satellite émet des signaux de radionavigation 22, 24 sur au moins les fréquences $f_1$ et $f_2$. (Par souci de clarté, la figure 1 ne montre pas toutes les liaisons satellite-récepteur possibles.) A chaque pas de temps $(t_k)$, on obtient donc, pour l'ensemble du réseau, un jeu de mesures de code $P_{1,i}{}^j(t_k)$, $P_{2,i}{}^j(t_k)$, $L_{1,i}{}^j(t_k)$ et $L_{2,i}{}^j(t_k)$, où l'indice supérieur (j) indique de nouveau le satellite dont les signaux ont été reçus et l'indice inférieur (i) le récepteur ayant fourni la mesure (étape S1 en figure 2). Comme les satellites orbitent autour de la Terre, seulement une partie d'entre eux est visible à un moment donné depuis chaque récepteur de référence. La dépendance du temps, l'indice de récepteur et l'indice de satellite ne seront pas indiqués explicitement, à moins que ce ne soit nécessaire pour la bonne compréhension.

Il convient de définir le deuxième terme du côté droit de l'équation (E2) comme différence d'horloge « iono-free » de code, notée $\Delta h_p = h_{p,rec} - h_{p,eme}$. De manière analogue, on définit une différence d'horloge « iono-free » de phase, notée $\Delta h = h_{rec} - h_{eme}$. Le système d'équations (E1) devient ainsi :

$$P_1 = D_1 + e + \Delta h_p + \Delta \tau_p$$
$$P_2 = D_2 + \gamma e + \Delta h_p + \gamma \Delta \tau_p$$
$$\lambda_1 L_1 = D_1 + \lambda_1 W - e + \Delta h + \Delta \tau - \lambda_1 N_1$$
$$\lambda_2 L_2 = D_2 + \lambda_2 W - \gamma e + \Delta h + \gamma \Delta \tau - \lambda_2 N_2 \qquad \text{(E5)}$$

- $\Delta \tau = \tau_{rec} - \tau_{eme}$ est le différentiel des biais d'horloge entre le récepteur et l'émetteur entre l'horloge « iono-free » de phase et l'horloge de phase pour la fréquence $f_1$ - par construction, la quantité correspondante pour la fréquence $f_2$ est $\gamma \Delta \tau$ ;
- $\Delta \tau_p = \tau_{p,rec} - \tau_{p,eme}$ est le différentiel des biais d'horloge entre le récepteur et l'émetteur entre l'horloge « iono-free » de code et l'horloge de code pour la fréquence $f_1$ - par construction, la quantité correspondante pour la fréquence $f_2$ est $\gamma \Delta \tau_p$ .

Avec cette nouvelle notation, on peut exprimer la combinaison de glissement code porteuse comme suit :

$$P_e = D_1 + \frac{\lambda_1 W}{2} + \Delta h + \frac{\Delta h_p - \Delta h + \Delta \tau_p + \Delta \tau}{2} - \frac{\lambda_1 N_1}{2} \qquad \text{(E6)}$$

On note que la valeur de cette combinaison (côté gauche de l'équation (E6)) se calcule directement avec les mesures de code et de phase (étape S2 en figure 2) tandis que les valeurs des paramètres de modélisation (côté droit de l'équation (E6)) ne sont pas connues au départ. On reconnaît que :

$$\Delta \Theta = \Delta h + \frac{\Delta h_p - \Delta h + \Delta \tau_p + \Delta \tau}{2} \qquad \text{(E7)}$$

Pour calculer les valeurs de $\Theta_{eme}$ pour les différents satellites, on détermine, dans une première étape, les valeurs $h_{eme}$ de manière cohérente sur le réseau de récepteurs. Ce procédé (étape S3 en figure 2) est décrit dans la demande de brevet FR 2 914 430 et dans l'article « Integer Ambiguity Resolution on Undifferenced GPS Phase Measurements and its Application to PPP » de D. Laurichesse et F. Mercier dans « Proceedings of ION GNSS 2007 », Forth Worth, Texas, 25-28 September, pp. 839-848.

Les différences de phase (non ambiguës) entre l'émission des signaux par le satellite et la réception par le récepteur s'écrivent $L_1 + N_1$ et $L_2 + N_2$, où $N_1$ et $N_2$ représentent les ambiguïtés (entières). On pose $N_w = N_2 - N_1$, $N_w$ étant appelée ambiguïté widelane (entière).

On calcule l'allongement ionosphérique de code par :

$$eP = \frac{P_1 - P_2}{1 - \gamma} . \qquad \text{(E8)}$$

On pose, :

$$\tilde{N}_1 = \frac{P_1 - 2eP}{\lambda_1} - L_1 \quad \text{et} \quad \tilde{N}_2 = \frac{P_2 - 2\gamma eP}{\lambda_2} - L_2 . \qquad \text{(E9)}$$

Ces quantités ne dépendent que des mesures.

Or, les bruits de mesure de code sont tels que, à l'échelle d'un passage (temps de visibilité d'un satellite), les estimées de $\tilde{N}_1$ et $\tilde{N}_2$ souffrent d'un bruit de l'ordre de la dizaine de cycles. On utilise les mesures de code pour déterminer l'ambiguïté widelane.

On introduit la valeur brute $\tilde{N}_w$ (qui est une valeur estimée) de l'ambiguïté widelane par :

$$\tilde{N}_w = \tilde{N}_2 - \tilde{N}_1 \qquad\qquad \text{(E10)}$$

En substituant (E5) dans (E9) on trouve pour $N_w$ une expression de la forme :

$$\tilde{N}_w = N_w + d + \mu_{rec} - \mu_{eme}. \qquad\qquad \text{(E11)}$$

où $\mu_{rec}$ est une combinaison linéaire de $\tau_{rec}$, $\tau_{p,rec}$, $h_{rec}-h_{p,rec}$, $\mu_{eme}$ est une combinaison linéaire de $\tau_{eme}$, $\tau_{p,eme}$, $h_{eme}-h_{p,eme}$ et d est proportionnel à la différence entre $D_1$ et $D_2$. La valeur de d étant généralement inférieure à 0,1 cycles de la widelane, cette quantité pourra être négligée dans ce qui suit. Par calcul de la moyenne sur un passage, on a :

$$< \tilde{N}_w > = N_w + < \mu_{rec} > - < \mu_{eme} > \qquad\qquad \text{(E12)}$$

A l'échelle d'un passage, $\tilde{N}_w$ présente un bruit suffisamment faible (en dessous de la fraction de cycle) pour effectuer une estimation correcte de $N_w$ et donc de $\mu_{rec}$ et $\mu_{eme}$ (les biais widelane $\mu_{rec}$ et $\mu_{eme}$ restent constants sur de longues durées).

En l'absence d'hypothèses supplémentaires, ce problème mixte entiers-réels est singulier : il est possible de décaler $N_w$ d'un nombre entier si on modifie en même temps la différence $\mu_{rec}-\mu_{eme}$. En outre, $\mu_{rec}$ et $\mu_{eme}$ ne sont définis qu'à une constante réelle près.

On commence le processus de calcul par choisir une première station du réseau, de préférence une dont on sait que les $\mu_{rec}$ sont stables dans le temps. Pour cette station, on fixe la valeur de $\mu_{rec}$ de façon arbitraire, p.ex. en posant $\mu_{rec}=0$. On parcourt alors les passages des satellites en visibilité de cette station. Pour chaque passage, on a $\langle \tilde{N}_w \rangle = N_w - \mu_{eme}$, par définition de la première station (avec $\mu_{rec}=0$).

On décompose alors $\langle \tilde{N}_w \rangle$ en une quantité entière arbitraire (p.ex. l'entier le plus proche), notée $N_w$, et une quantité pas nécessairement entière correspondant à la différence $N_w - \langle \tilde{N}_w \rangle$, que l'on note $\mu_{eme}$. Cela fournit les $\mu_{eme}$ des satellites en visibilité de la première station.

Pour l'ensemble des satellites dont on connaît maintenant les délais internes $\mu_{eme}$, on estime les délais $\mu_{rec}$ des autres stations. Cette fois-ci, dans l'équation $\langle \tilde{N}_w \rangle = N_w + \mu_{rec} - \mu_{eme}$, la valeur de $\mu_{eme}$ est connue. On décompose alors $\langle \tilde{N}_w \rangle + \mu_{eme}$ en un nombre entier arbitraire $N_w$ (de la nouvelle station) et le délai de station $\mu_{rec}$ correspondant. On répète ces étapes pour tous les satellites et toutes les stations du réseau de référence. On obtient finalement des valeurs $\mu_{eme}$ cohérentes sur tout le réseau de référence. Les valeurs $\mu_{eme}$ peuvent être considérées comme constantes sur au moins une journée.

Après avoir déterminé l'ambiguïté widelane, l'ambiguïté $N_1$ reste inconnue.

Du fait que l'ambiguïté widelane est connue, la résolution le l'ambiguïté de phase $N_1$ ou $N_2$ (ambiguïté narrowlane) est facilitée de façon significative, en particulier en ce qui concerne les précisions de modélisation nécessaires.

Les mesures de code $P_1$ et $P_2$ dépendent de plusieurs paramètres dont la distance géométrique entre les points d'émission et de réception, les effets ionosphériques, les effets troposphériques ainsi que les horloges d'émetteur et de récepteur. Pour identifier les ambiguïtés restantes, il faut disposer d'une modélisation suffisamment précise de ces grandeurs, ce qui va nécessiter une résolution globale sur le réseau de récepteurs à traiter, à cause des horloges.

On pose :

$$\hat{Q}_c = \frac{\gamma \lambda_1 \left( L_1 + \hat{N}_1 \right) - \lambda_2 \left( L_2 + \hat{N}_1 + N_w \right)}{\gamma - 1} \qquad\qquad \text{(E13)}$$

où $\tilde{N}_1$ est une estimée entière de $N_1$, p. ex. l'entier le plus proche de $\langle \tilde{N}_1 \rangle$. $\tilde{N}_1$ peut être éloignée de la vraie valeur de

$N_1$ d'une dizaine de cycles à cause du bruit de mesure sur le code.

$\tilde{Q}_c$ représente donc une estimée de la combinaison iono-free non-ambiguë de phase $Q_c$ (qui n'est pas mesurable directement) :

$$Q_c = \frac{\gamma\lambda_1\left(L_1 + N_1\right) - \lambda_2\left(L_2 + N_1 + N_w\right)}{\gamma - 1} \qquad \text{(E14)}$$

En posant $\delta N_1 = N_1 - \tilde{N}_1$, on a le système :

$$\begin{aligned} P_c &= D + \Delta h_p \\ Q_c &= D_w + \Delta h + \lambda_c \delta N_1 \end{aligned} , \qquad \text{(E15)}$$

où $\lambda_c = (\gamma\lambda_1 - \lambda_2)/(\gamma - 1)$, $D = (\gamma D_1 - D_2)/(\gamma - 1)$ (distance geométrique entre les centres de phase, contribution ionosphérique compensée), et $D_w = \lambda_c D$.

Au lieu de calculer directement $N_1$, on détermine d'abord $\delta N_1$. Pour ce faire, il faut une modélisation précise de $D_w$ qui fait notamment intervenir les éléments suivants :

- combinaison des centres de phase bi-fréquence : il s'agit de la combinaison iono-free des centres de phase antenne (L1 et L2) récepteur et émetteur ;

- les orbites précises des satellites ;

- loi d'attitude des satellites (loi d'attitude nominale en lacet) ;

- effets relativistes dus à l'excentricité des satellites ;

- modélisation précise de la position du récepteur (avec modèle de marées terrestres) ;

- modélisation de l'allongement troposphérique (un allongement vertical par station avec la fonction de rabattement dépendant du site telle que définie dans le Stanag) ;

- modélisation du Wind-up (rotation géométrique de phase).

Les paramètres estimés par le filtre sont :

- à chaque pas de temps, les horloges $h_{eme}$ et $h_{rec}$ des satellites et des stations ;

- pour chaque passage, une ambiguïté de phase constante $\delta N_1$ (sans la contrainte qu'il s'agit d'un nombre entier)

- un allongement troposphérique vertical pour chaque station, avec une variation lente dans le temps (typiquement un segment constant toutes les 4 heures) ;

- des orbites précises des satellites (si des orbites précises ne sont pas fournies comme données d'entrée).

Le filtre peut être en formulation moindres carrés ou en formulation de Kalman, plus compatible avec un traitement temps-réel. Les valeurs d'entrée utilisées par le filtrage sont les valeurs de code iono-free et de phase iono-free, avec leurs bruits respectifs, qui sont de l'ordre de 1 m pour le code et 1 cm pour la phase.

A l'issue de cette étape, on obtient des estimées des résidus $\delta N_1$ identifiés calculés par $(\tilde{Q}_c - D_w - \Delta h)/\lambda_c$. Des exemples de résidus $\delta N_1$ sont montrés à la fig. 1. (Les $\delta N_1$ ne sont pas entiers car aucune hypothèse sur les entiers n'a été faite lors du filtrage.)

Cette étape de filtrage sert avant tout à calculer proprement le terme $D_w$ (modélisation géométrique). Les horloges identifiées à cette étape sont utilisées par la suite comme valeurs initiales ce qui permet par la suite de travailler sur des petites variations d'horloges, mais ce n'est pas indispensable.

Avec la valeur de $D_w$ obtenue par le filtrage, on cherche maintenant, au niveau du réseau de référence les valeurs entières des $\delta N_1$. On utilise de nouveau l'équation

$$\hat{Q}_c - D_w = \lambda_c \delta N_1 + h_{rec} - h_{eme}, \qquad (E16)$$

où $D_w$ prend maintenant la valeur trouvée par le filtrage. On remarque que l'équation possède une inobservabilité globale. En effet, on peut décaler les valeurs $\delta N_1$ concernant un émetteur donné et les valeurs $h_{eme}$ et/ou $h_{rec}$ correspondantes en conservant l'équation valide :

$$\hat{Q}_c - D_w = \lambda_c (\delta N_1 + \alpha) + (h_{rec} - \lambda_c \alpha) - h_{eme} \qquad (E17)$$

A cette étape, on calcule de façon itérative les valeurs heme en commençant avec une première station (un premier récepteur de référence) dont l'horloge est prise comme horloge de référence, et en rajoutant successivement des stations afin de compléter la totalité du réseau.

Pour la première station, on choisit $\delta N_1=0$ et $h_{rec}= 0$. Ce choix est arbitraire et résulte en un jeu de $h_{eme}$ pour les satellites visibles depuis la première station tel que l'équation (E16) est vérifiée.

L'ajout d'une station est effectué comme suit. Avec le jeu de $h_{eme}$ connus avant l'ajout de la station on calcule les résidus $\delta N_1+h_{rec}/\lambda_c$ qu'il faut exprimer sous la forme d'une valeur entière par passage (le $\delta N_1$), et un réel à chaque pas de temps (correspondant à l'horloge $h_{rec}$ de la station ajoutée). La fig. 2 montre les résidus $\delta N_1+h_{rec}/\lambda_c$ pour une station nouvellement ajoutée. On remarque que les résidus sont espacés de valeurs entières et que leur décalage par rapport à la valeur entière la plus proche est identique. On peut donc poser que le décalage entre le résidu et la valeur entière la plus proche correspond à $h_{rec}/\lambda_c$ et la valeur entière elle-même à $\delta N_1$.

On note que pour une nouvelle station, les horloges des satellites, et donc les résidus $\delta N_1+h_{rec}/\lambda_c$ ne sont connus, a priori, que sur une partie des passages.

Mais comme $\delta N_1$ est constante par passage (les sauts de cycles sont comptabilisés dans $\tilde{Q}_c - D_w$), on peut l'étendre à la totalité du passage. Les époques auxquelles un satellite donné est visible à partir d'une station ne correspondent qu'en partie aux époques auxquelles le même satellite est visible pour une station voisine. Plus les stations sont distantes, moins les durées de temps d'observation commune sont grandes. Ceci implique qu'on ajoute toujours une station voisine au moins à une des stations précédentes.

On note qu'ensemble avec le jeu de $\delta N_1$ entiers, on obtient aussi un jeu d'horloges de satellite $h_{eme}$ et de récepteurs $h_{rec}$ cohérents, ayant comme horloge de référence celle de la première station.

A l'aide des valeurs $\{\mu_{eme}^j\}$ (valides pendant au moins une journée) et $\{h_{eme}^j\}$ (devant être mises à jour à chaque époque), un récepteur bi-fréquence extérieur au réseau peut déterminer les ambiguïtés $N_1$ de manière efficace pour les satellites en vue.

Par contre, pour trouver la quantité $\Theta_{eme}$, il faut encore connaître la partie émetteur du deuxième terme sur le côté droit de l'équation (E7), c.-à-d. $(h_{p,eme} - h_{eme} + \tau_{p,eme} + \tau_{eme})/2$, que l'on notera $C_{eme}$ par la suite. On définit en outre : $C_{rec} = (h_{p,rec} - h_{rec} + \tau_{p,rec} + \tau_{rec})/2$ et $\Delta C = C_{rec} - C_{eme}$.

Dans le réseau de récepteurs de référence, les valeurs de $\mu_{rec}$, $N_w$, $N_1$, $h_{rec}$ et $h_{eme}$ sont connues grâce aux calculs précédents. La quantité $\Delta C$ est donc observable :

$$\Delta C = \frac{P_1 + \lambda_1 L_1}{2} - D_1 - \frac{\lambda_1 W}{2} - \Delta h + \frac{\lambda_1 N_1}{2} = C_{rec} - C_{eme} \qquad (E18)$$

On note que $\Delta C$ correspond au résidu de mesure que l'on obtient en retranchant de la combinaison de glissement de code porteuse (c.-à-d. du terme $(P_1+\lambda_1 L_1)/2$), la contribution géométrique (modélisée) qui inclut la distance et l'effet windup (c.-à-d. le terme $D_1+\lambda_1 W/2$), la contribution des valeurs d'horloge récepteur et émetteur iono-free de phase (c.-à-d. le terme $\Delta h$) ainsi que la contribution de l'ambiguïté de la mesure de phase (c.-à-d. le terme $-\lambda_1 N_1/2$). On peut calculer les parties récepteur et émetteur $C_{rec}$ et $C_{eme}$ du résidu de mesure par exemple par la méthode des moindres carrés à chaque pas de temps (étape S4 en figure 2). En tenant compte de tous les récepteurs du réseau, on a un système d'équations de la forme :

$$\{\Delta C_i^j = C_{rec,i} - C_{eme}^j\}_{i,j} \,, \qquad\qquad (E19)$$

ce qui peut s'écrire $\overrightarrow{\Delta C} = \Gamma \vec{x}$, où $\Gamma$ est la matrice des dérivées partielles et $\vec{x}$ est le vecteur des inconnues:

$\vec{x} = (C_{rec,1}, \ldots, C_{rec,I}, C_{eme}^1, \ldots, C_{eme}^J)^T$, avec $I$ = nombre de récepteurs dans le réseau et $J$ = nombre de satellites.

On note encore une fois que les $C_{eme}$ ne dépendent que des satellites tandis que les $C_{rec}$ ne dépendent que des récepteurs. Comme le système (E19) comprend une équation de moins que d'inconnues, il convient de rajouter une équation de contrainte, qui fixe par exemple la somme ou moyenne des $C_{eme}$ à 0 :

$$\sum_j C_{eme}^j = 0 \qquad\qquad (E20)$$

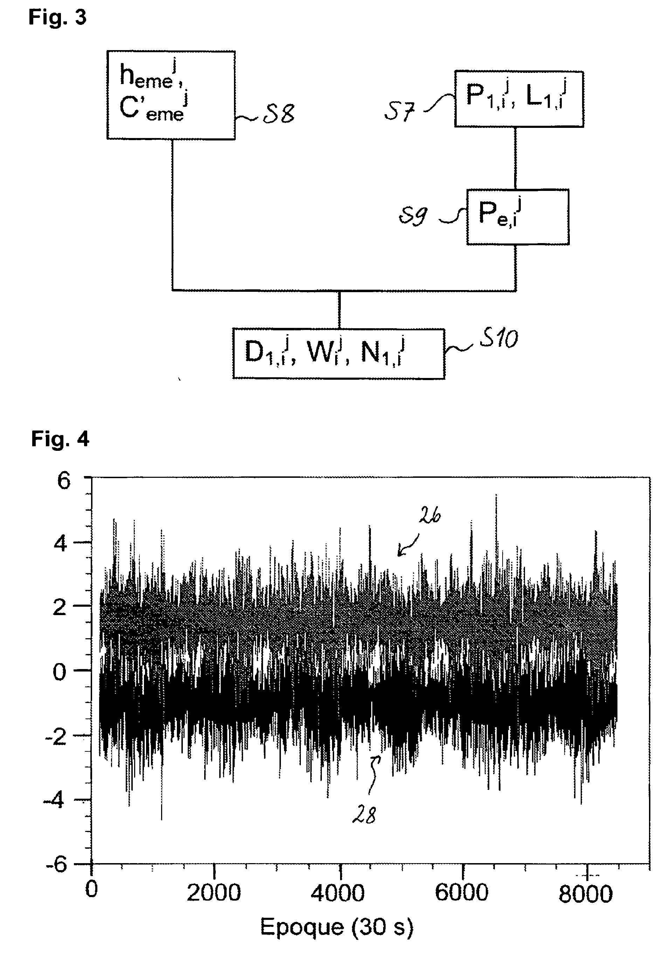

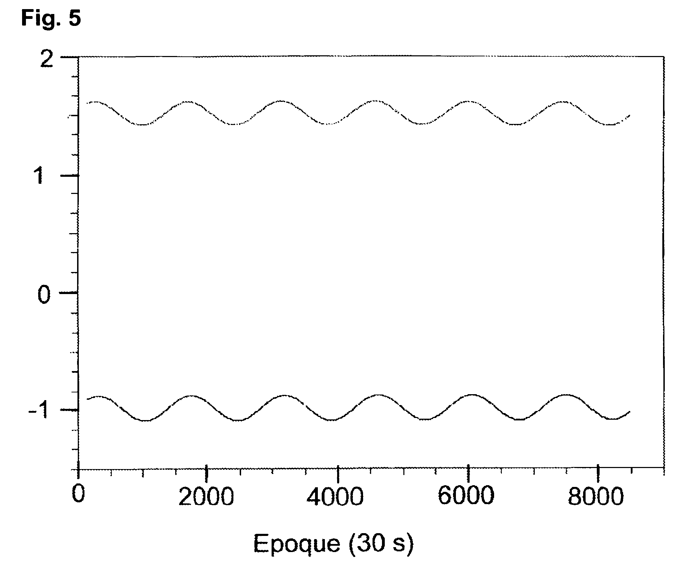

Les valeurs $C_{eme}$ que l'on trouve sont très bruitées à cause du bruit de code sur les mesures. Deux exemples de tracés 26, 28 de $C_{eme}$ sont représentés en figure 4. De préférence, on lisse les valeurs $C_{eme}$ par un modèle (étape S5 en figure 2). On a trouvé que l'on utilise de préférence une fonction sinus à la période de 12 heures pour l'ajuster sur chaque $C_{eme}$. On trouve ainsi les valeurs lissées $C'_{eme}^j(t)$. La figure 5 montre les tracés de la figure 4 après lissage avec des fonctions sinus.

Comme données d'assistance, on a finalement (étape S6 en figure 2) les valeurs d'horloge émetteur iono-free $h_{eme}$ (une valeur par pas de temps et par satellite) et les valeurs $C'_{eme}$ (identifiées par les paramètres des fonctions sinus) qui peuvent être transmises à un récepteur extérieur au réseau et utilisées par celui-ci pour fixer les ambiguïtés $N_1$.

Un procédé de géopositionnement dans un récepteur extérieur au réseau de référence qui met à disposition les valeurs $h_{eme}$ et $C'_{eme}$ est montré schématiquement en figure 3. Le récepteur effectue des mesures de code et de phase pour les satellites visibles depuis son lieu géographique (étape S7 en figure 3). En outre, il reçoit les valeurs $h_{eme}$ et $C'_{eme}$ (étape S8 en figure 3). Avec les mesures de code et de phase sur la fréquence $f_1$, le récepteur peut dériver l'observable de glissement de code porteuse (étape S9 en figure 3). En utilisant en outre les données d'assistance, le récepteur peut ensuite calculer les quantités :

$$\frac{P_1^j + \lambda_1 L_1^j}{2} + h_{eme}^j + C'_{eme}^j = D_1^j + \frac{\lambda_1 W^j}{2} - \frac{\lambda_1 N_1^j}{2} + h_{rec} + C_{rec} \qquad\qquad (E21)$$

Dans le système (E21), les indices de satellite ont été utilisés pour mieux mettre en évidence quels termes sont communs à tous les satellites (tous les canaux du récepteur). On note que le terme $h_{rec} + C_{rec}$ est commun à tous les canaux du récepteur et équivaut à une horloge globale, à estimer à chaque pas de temps (c.-à-d. pour chaque mesure). L'ambiguïté de phase $N_1$, qui dépend du satellite, ne prend qu'une seule valeur par passage (temps de visibilité du satellite) si on admet que l'observation n'est pas interrompue pendant ce temps et que les sauts de phase sont détectés et comptabilisés dans la mesure de phase $L_1$. Il est utile de remarquer qu'il suffit au récepteur de connaître les valeurs $h_{eme} + C'_{eme}$ ; les valeurs $h_{eme}$ et $C'_{eme}$ n'ont donc pas besoin d'être transmises séparément. Notons aussi que $h_{rec} + C_{rec}$ correspond à $\Theta_{rec}$ tel que défini plus haut ; on a de même : $h_{eme} + C'_{eme} = \Theta_{eme}$.

Si la position du récepteur et l'allongement troposphérique correspondant sont connus (c.-à-d. si $D_1$ est connu), les quantités $(P_1 + \lambda_1 L_1)/2 - \lambda_1 W/2 - D_1 + h_{eme} + C_{eme}$ s'agrègent autour de valeurs séparées entre elles par des écarts égaux à des multiples entiers de $\lambda_1/2$.

Si on souhaite déterminer la position du récepteur ($D_1$ étant dans ce cas inconnu au départ), on peut, par exemple, résoudre un problème de moindres carrés sur une certaine durée (p.ex. quelques heures), dans lesquels les paramètres suivants sont à déterminer (étape S10 en figure 3) :

 o la position du récepteur (incluse dans la modélisation de $D_1$) ;

 o l'allongement troposphérique à la verticale (inclus dans la modélisation de $D_1$) ;

 o l'horloge récepteur associée à la combinaison de glissement code porteuse ($h_{rec} + C_{rec}$) ; et

o les ambiguïtés de phase (une valeur par passage).

Les ambiguïtés peuvent ensuite être fixées par un mécanisme de « bootstrap » : une ambiguïté est fixée sur un entier arbitraire, suite à quoi les autres ambiguïtés s'agrègent autour de valeurs entières et peuvent être fixées de manière itérative.

A l'aide des informations $h_{eme}$ et $C'_{eme}$, la mesure de glissement de code porteuse devient une observable non ambiguë, libérée de la contribution ionosphérique (« iono-free »), qui possède un bruit valant la moitié du bruit de code. Le PPP (de l'anglais « Precise Point Positioning » - positionnement précis de point) a une précision de 20 à 50 cm en positionnement purement stochastique. Sa précision augmente rapidement si on réalise un positionnement statique du récepteur en stockant plusieurs minutes de mesures. A titre d'exemple, on obtient une précision de positionnement de l'ordre de 10 cm pour un quart d'heure de mesures et d'environ 2 cm pour une demi-heure de données (avec un récepteur qui n'est pas trop affecté par les multi-trajets). Les temps d'initialisation sont de l'ordre d'une heure.

**Revendications**

1. Procédé de détermination de données d'assistance facilitant le traitement de signaux de radionavigation provenant d'un ensemble de satellites de radionavigation (16, 18, 20), dont chacun diffuse au moins un premier signal de radionavigation (22) sur une première fréquence et un deuxième signal de radionavigation (24) sur une deuxième fréquence distincte de la première, le procédé comprenant les actions :

   recevoir des mesures de code et de phase desdits signaux de radionavigation réalisées par des récepteurs d'un réseau de référence (10, 12, 14) ; lesdites mesures de phase présentant chacune une ambiguïté d'un nombre entier de cycles a priori inconnue (S1) ;
   résoudre les ambiguïtés des mesures de phase sur la première fréquence de manière cohérente sur l'ensemble des satellites et des récepteurs de référence (S3) ;
   déduire un ensemble de valeurs d'horloge émetteur iono-free de phase découlant de la résolution cohérente desdites ambiguïtés et un ensemble de valeurs d'horloge récepteur iono-free de phase découlant de la résolution cohérente desdites ambiguïtés (S3) ;

   **caractérisé par** les actions :

   calculer, pour chaque couple satellite - récepteur de référence, une valeur de combinaison de glissement de code porteuse, aussi appelée combinaison GRAPHIC et qui utilise la somme de la mesure de phase et de la mesure de code, à partir de la mesure de code et de la mesure de phase réalisée dans ce récepteur de référence pour ce satellite sur la première fréquence (S2), et retrancher de cette valeur la contribution géométrique, la contribution des valeurs d'horloge récepteur iono-free de phase et d'horloge émetteur iono-free de phase ainsi que la contribution de l'ambiguïté de la mesure de phase résolue, de sorte à obtenir ainsi un résidu de mesure (S4) ;
   séparer de manière cohérente sur l'ensemble des satellites et des récepteurs du réseau chacun des résidus de mesure obtenus en une partie émetteur et une partie récepteur ; et
   lisser la partie émetteur desdits résidus de mesure (S5).

2. Procédé selon la revendication 1, dans lequel les valeurs d'horloge émetteur iono-free associées à la résolution cohérente des ambiguïtés ainsi que les parties émetteur lissées desdits résidus de mesure sont mises à disposition de récepteurs extérieurs au réseau comme données d'assistance.

3. Procédé selon la revendication 1 ou 2, comprenant, pour chaque satellite (16, 18, 20) dudit ensemble de satellites, l'action de calculer une valeur d'horloge émetteur associée à la combinaison de glissement code porteuse comme somme de la valeur d'horloge émetteur iono-free et du résidu de mesure lissé.

4. Procédé selon la revendication 3, dans lequel lesdites valeurs d'horloge émetteur associée à la combinaison de glissement code porteuse sont mises à disposition de récepteurs extérieurs au réseau comme données d'assistance.

5. Procédé selon la revendication 2 ou 4, dans lequel ladite mise à disposition est effectuée par une voie de télécommunication.

6. Procédé selon l'une quelconque des revendications 1 à 5, dans lequel le lissage des parties émetteur desdits résidus de mesure est réalisé à chaque fois par ajustage d'une fonction sinus d'une période de 12 heures.

**7.** Produit de programme d'ordinateur comprenant des moyens de support portant un code de programme d'ordinateur configuré pour mettre en oeuvre le procédé selon l'une quelconque des revendications 1 à 6 lorsqu'il est exécuté sur un ordinateur.

**8.** Procédé de géopositionnement par signaux de radionavigation provenant d'un ensemble de satellites (16, 18, 20), dont chaque satellite diffuse au moins un premier signal de radionavigation (22) sur une première fréquence et un deuxième signal de radionavigation (24) sur une deuxième fréquence distincte de la première, le procédé comprenant, au niveau d'un récepteur de signaux de radionavigation, les actions :

recevoir, pour chaque satellite dudit ensemble et visible depuis ledit récepteur, au moins ledit premier signal de radionavigation ;
effectuer, pour chaque satellite visible, des mesures de code et de phase du premier signal de radionavigation reçu ; lesdites mesures de phase présentant une ambiguïté d'un nombre entier de cycles a priori inconnue (S7) ;
recevoir un ensemble de données d'assistance (S8) ;
le procédé étant **caractérisé**
**par le fait que** l'ensemble de données d'assistance comprend, pour chaque satellite de l'ensemble de satellites, des données suffisantes pour reconstituer la valeur d'horloge émetteur associée à la combinaison de glissement code porteuse, aussi appelée combinaison GRAPHIC qui utilise la somme de la mesure de phase et de la mesure de code, déduite de manière cohérente sur l'ensemble de satellites (16, 18, 20) et de récepteurs d'un réseau de référence (10, 12, 14);
et les actions :

calculer, pour chaque satellite, une valeur de combinaison de glissement de code porteuse à partir de la mesure de code et de la mesure de phase du premier signal de radionavigation, et retrancher de cette valeur de combinaison de glissement de code porteuse la valeur d'horloge émetteur associée à la combinaison de glissement code porteuse, de sorte à ainsi obtenir une observable de glissement code porteuse non-ambiguë ; et
déterminer la position du récepteur à l'aide des observables de glissement code porteuse non-ambiguës (S10).

**9.** Procédé selon la revendication 8, dans lequel les données suffisantes pour reconstituer la valeur d'horloge émetteur associée à la combinaison de glissement code porteuse comprennent la valeur d'horloge de satellite associée à la combinaison de glissement code porteuse.

**10.** Procédé selon la revendication 8, dans lequel les données suffisantes pour reconstituer la valeur d'horloge émetteur associée à la combinaison de glissement code porteuse comprennent les valeurs d'horloge émetteur iono-free de phase associées à la résolution cohérente des ambiguïtés ainsi que les parties émetteur lissées desdits résidus de mesure obtenues par un procédé selon l'une quelconque des revendications 1 à 6.

**11.** Procédé selon l'une quelconque des revendications 1 à 6 ou 8 à 10, dans lequel la première fréquence est sélectionnée parmi 1575,42 MHz, 1227,6 MHz, 1176,45 MHz, 1207,14 MHz, 1278,75 MHz, 1561,098 MHz, 1589,742 MHz, 1207,14 MHz ou 1268,52 MHz.

**12.** Produit de programme d'ordinateur comprenant des moyens de support portant un code de programme d'ordinateur configuré pour mettre en oeuvre le procédé selon l'une quelconque des revendications 8 à 10 lorsqu'il est exécuté sur un ordinateur.

**13.** Récepteur GNSS configuré pour mettre en oeuvre le procédé selon l'une quelconque des revendications 8 à 10.

**Patentansprüche**

**1.** Verfahren zur Bestimmung von Hilfsdaten, die die Verarbeitung von Funknavigationssignalen erleichtern, die aus einer Gesamtheit von Funknavigationssatelliten (16, 18, 20) stammen, von denen jeder mindestens ein erstes Funknavigationssignal (22) auf einer ersten Frequenz und ein zweites Funknavigationssignal (24) auf einer zweiten, sich von der ersten Frequenz unterscheidenden Frequenz aussendet, wobei das Verfahren die folgenden Schritte aufweist:

Empfangen von Code- und Phasenmessungen der Funknavigationssignale, die von den Empfängern eines Referenznetzwerks (10, 12, 14) vorgenommen wurden; wobei die Phasenmessungen jeweils eine im Voraus unbekannte Mehrdeutigkeit einer ganzen Zahl von Zyklen aufweisen (S1);
Auflösen der Mehrdeutigkeiten der Phasenmessungen auf der ersten Frequenz in kohärenter Weise auf der Gesamtheit von Satelliten und Bezugsempfängern (S3);
Ableiten einer Gesamtheit von ionosphärenfreien Senderuhrphasenwerten, die sich aus der kohärenten Auflösung der Mehrdeutigkeiten ergeben, sowie einer Gesamtheit von ionosphärenfreien Empfängeruhrphasenwerten, die sich aus der kohärenten Auflösung der Mehrdeutigkeiten ergeben (S3);

**gekennzeichnet durch** die folgenden Schritte:
Berechnen eines Wertes einer Träger-Code-Verschiebungs-Kombination für jedes Paar von Satellit und Referenzempfänger, die auch als GRAPHIC-Kombination bezeichnet wird und die Summe aus Phasenmessung und Codemessung verwendet, aus der Codemessung und der Phasenmessung, die in diesem Referenzempfänger für diesen Satelliten auf der ersten Frequenz vorgenommen wurden (S2), und
Abziehen des geometrischen Anteils, des Anteils der ionosphärenfreien Empfängeruhrphasenwerte und der ionosphärenfreien Senderuhrphasenwerte sowie des Anteils der aufgelösten Mehrdeutigkeit der Phasenmessung von diesem Wert, um so ein Messresiduum zu erhalten (S4);
Auftrennen der erhaltenen Messresiduen jeweils in einen Senderanteil und einen Empfängeranteil in einer auf der Gesamtheit von Satelliten und Empfängern des Netzwerks kohärenten Weise; und
Glätten des Senderanteils der Messresiduen (S5).

2. Verfahren nach Anspruch 1, wobei die der kohärenten Auflösung der Mehrdeutigkeiten zugeordneten ionosphärenfreien Senderuhrphasenwerte sowie die geglätteten Senderanteile der Messresiduen außerhalb des Netzwerks befindlichen Empfängern als Hilfsdaten bereit gestellt werden.

3. Verfahren nach Anspruch 1 oder 2, aufweisend für jeden Satelliten (16, 18, 20) der Gesamtheit von Satelliten den Schritt des Berechnens eines Senderuhrwertes, der der Träger-Code-Verschiebungs-Kombination zugeordnet ist, als Summe des ionosphärenfreien Senderuhrwertes und des geglätteten Messresiduums.

4. Verfahren nach Anspruch 3, wobei die Senderuhrwerte, die der Träger-Code-Verschiebungs-Kombination zugeordnet sind, außerhalb des Netzwerks befindlichen Empfängern als Hilfsdaten bereit gestellt werden.

5. Verfahren nach Anspruch 2 oder 4, wobei die Bereitstellung über einen Telekommunikationsweg erfolgt.

6. Verfahren nach einem der Ansprüche 1 bis 5, wobei die Glättung der Senderanteile der Messresiduen jedes Mal durch Anpassung einer Sinusfunktion mit einer Periode von 12 Stunden erfolgt.

7. Computerprogrammprodukt, aufweisend Trägermittel, die einen Computerprogrammcode tragen, der dafür konfiguriert ist, das Verfahren nach einem der Ansprüche 1 bis 6 durchzuführen, wenn es auf einem Computer ausgeführt wird.

8. Verfahren zur geographischen Positionsbestimmung durch Funknavigationssignale, die aus einer Gesamtheit von Satelliten (16, 18, 20) stammen, von denen jeder mindestens ein erstes Funknavigationssignal (22) auf einer ersten Frequenz und ein zweites Funknavigationssignal (24) auf einer zweiten, sich von der ersten Frequenz unterscheidenden Frequenz aussendet, wobei das Verfahren an einem Empfänger für Funknavigationssignale die folgenden Schritte aufweist:

Empfangen zumindest des ersten Funknavigationssignals für jeden der von dem Empfänger aus sichtbaren Satelliten der Gesamtheit;
Durchführen von Code- und Phasenmessungen des ersten erhaltenen Funknavigationssignals für jeden sichtbaren Satelliten; wobei die Phasenmessungen eine im voraus unbekannte Mehrdeutigkeit einer ganzen Zahl von Zyklen aufweisen (S7);
Empfangen eines Satzes von Hilfsdaten (S8);
wobei das Verfahren **gekennzeichnet ist durch**
die Tatsache, dass der Satz von Hilfsdaten für jeden Satelliten der Gesamtheit von Satelliten Daten aufweist, die ausreichen, um den Senderuhrwert neu zu bilden, welcher der Träger-Code-Verschiebungs-Kombination zugeordnet ist, die auch als GRAPHIC-Kombination bezeichnet wird und die Summe der Phasenmessung und der Codemessung verwendet, und welcher in auf der Gesamtheit von Satelliten (16, 18, 20) und Empfängern eines Referenznetzwerks (10, 12, 14) kohärenter Weise hergeleitet worden ist; und **durch** die folgenden Schritte:

Berechnen eines Träger-Code-Verschiebungs-Kombinations-Wertes aus der Codemessung und der Phasenmessung des ersten Funknavigationssignals für jeden Satelliten, und Abziehen von diesem Träger-Code-Verschiebungs-Kombinations-Werts den Senderuhrwert, der der Träger-Code-Verschiebungs-Kombination zugeordnet ist, um so eine nicht mehrdeutige Träger-Code-Verschiebungs-Observable zu erhalten; und

Bestimmen der Position des Empfängers mit Hilfe der nicht mehrdeutigen Träger-Code-Verschiebungs-Observablen (S10).

**9.** Verfahren nach Anspruch 8, wobei die Daten, die ausreichen, um den Senderuhrwert, der der Träger-Code-Verschiebungs-Kombination zugeordnet ist, neu zu bilden, den Satellitenuhrenwert umfassen, der der Träger-Code-Verschiebungs-Kombination zugeordnet ist.

**10.** Verfahren nach Anspruch 8, wobei die Daten, die ausreichen, um den Senderuhrwert, der der Träger-Code-Verschiebungs-Kombination zugeordnet ist, neu zu bilden, die ionosphärenfreien Senderuhrphasenwerte, die der kohärenten Auflösung der Mehrdeutigkeiten zugeordnet sind, sowie die geglätteten Senderanteile der Messresiduen, die durch ein Verfahren nach einem der Ansprüche 1 bis 6 erhalten wurden, umfassen.

**11.** Verfahren nach einem der Ansprüche 1 bis 6 oder 8 bis 10, wobei die erste Frequenz ausgewählt ist aus 1575,42 MHz, 1227,6 MHz, 1176,45 MHz, 1207,14 MHz, 1278,75 MHz, 1561,098 MHz, 1589,742 MHz, 1207,14 MHz oder 1268,52 MHz.

**12.** Computerprogrammprodukt, aufweisend Trägermittel, die einen Computerprogrammcode tragen, der dafür konfiguriert ist, das Verfahren nach einem der Ansprüche 8 bis 10 durchzuführen, wenn es auf einem Computer ausgeführt wird.

**13.** GNSS-Empfänger, der dafür konfiguriert ist, das Verfahren nach einem der Ansprüche 8 bis 10 durchzuführen.

## Claims

**1.** A method of determining assistance data to facilitate the processing of radio-navigation signals from a set of navigational satellites (16, 18, 20), each broadcasting at least a first radio-navigation signal (22) on a first frequency and a second navigation signal (24) on a second frequency distinct from the first, the method comprising the actions:

receiving code and phase measurements from the said radio-navigation signals recorded by receivers in a reference network (10, 12, 14); said phase measurements having each a priori unknown ambiguity of an unknown integer number of cycles (S1);
resolving the ambiguities in the phase measurements on the first frequency in a manner consistent for all the satellites and reference receivers (S3);
deducing a set of iono-free transmitter phase clock values arising from the consistent resolution of said ambiguities and a set of iono-free receiver phase clock values arising from the consistent resolution of said ambiguities (S3);

**characterised by** the actions:

calculating, for each satellite - reference receiver pair, value of a carrier code shift combination, also called GRAPHIC combination and that uses the sum of the phase measurement and the code measurement, from the code measurement and the phase measurement performed by this reference receiver for this satellite on the first frequency (S2), and subtracting from this value the geometric contribution, the contribution of the iono-free receiver phase clock value and the iono-free transmitter phase clock value as well as the contribution of the resolved ambiguity of the phase measurement, so as to obtain a measurement residue (S4);
separating, in a manner consistent for all the satellites and receivers of the network, each of the obtained measurement residues into a transmitter part and a receiver part, and

smoothing the transmitter part of the said measurement residues (S5).

**2.** The method according to claim 1, wherein the iono-free transmitter clock values associated with the consistent resolution of the ambiguities as well as the smoothed transmitter parts of the said measurement residues are provided to receivers outside the network as assistance data.

**3.** The method according to claim 1 or 2, comprising, for each satellite (16, 18, 20) of said set of satellites, the action to calculate a transmitter clock value associated with the carrier code shift combination as the sum of the iono-free transmitter clock value and the smoothed measurement residue.

**4.** The method according to claim 3, wherein said transmitter clock values associated with the carrier code shift combination are provided to receivers outside the network as assistance data.

**5.** The method according to claim 2 or 4, wherein said provision is effected over a telecommunications channel.

**6.** The method according to any of the claims 1 to 5, wherein the smoothing of the transmission parts of the said measurement residues is performed each time by adjusting a sine function with a period of 12 hours.

**7.** A computer program product comprising carrier means containing a computer program code configured to implement the method according to any one of claims 1 to 6 when run on a computer.

**8.** A method of geopositioning by radio-navigation signals from a set of satellites (16, 18, 20), each broadcasting at least a first radio-navigation signal (22) on a first frequency and a second navigation signal (24) on a second frequency distinct from the first, the method comprising at the level of a radio-navigation signal receiver the actions:

receiving, for each satellite of the said set and visible from the said receiver,
at least the said first radio-navigation signal;
performing, for each visible satellite, the code measurements and the phase measurements of the first radio-navigation signal received, said phase measurements presenting an ambiguity of an a priori unknown integer number of cycles (S7);
receiving a set of assistance data (S8);
the method being **characterised**
**in that** the set of assistance data comprises, for each satellite of the set of satellites, data sufficient for reconstructing the transmitter clock value associated with the carrier code shift combination, also called GRAPHIC combination and that uses the sum of the phase measurement and the code measurement, derived in a consistent manner for all the satellites (16, 18, 20) and receivers of a reference network (10, 12, 14);
and the actions:

calculating, for each satellite, a carrier code shift combination value from the code measurement and the phase measurement of the first radio-navigation signal, and subtracting from this carrier code shift combination value the transmitter clock value associated with the carrier code shift combination, so as to obtain an unambiguous carrier code shift observable; and
determining the position of the receiver using the non-ambiguous carrier code shift observables (S10).

**9.** The method according to claim 8, wherein the data sufficient for reconstructing the transmitter clock value associated with the carrier code shift combination comprise the satellite clock value associated with the carrier code shift combination.

**10.** The method according to claim 8, wherein the data sufficient for reconstructing the transmitter clock value associated with the carrier code combination shift comprise the iono-free transmitter phase clock values associated with the consistent resolution of the ambiguities as well as the smoothed transmitter parts of the said measurements residues obtained by a method according to any of the claims 1 to 6.

**11.** The method according to any of claims 1 to 6 or 8 to 10, wherein the first frequency is selected among 1575.42 MHz, 1227.6 MHz, 1176.45 MHz, 1207.14 MHz, 1278.75 MHz, 1561.098 MHz, 1589.742 MHz, 1207.14 MHz or 1268.52 MHz.

**12.** A computer program product comprising carrier means containing a computer program code configured to implement the method according to any one of claims 8 to 10 when it is run on a computer.

13. A GNSS receiver configured to implement the method according to any one of claims 8 to 10.

**Fig. 1**

**Fig. 2**

$P_{1,i}^{j}, P_{2,i}^{j}, L_{1,i}^{j}, L_{2,i}^{j}$ — S1

$N_{w,i}^{j}, h_{eme}^{j}, h_{rec,i}, N_{1,i}^{j}, D_{1,i}^{j}, W_{i}^{j}$ — S3

$P_{e,i}^{j}$ — S2

$h_{eme}^{j}, C'_{eme}^{j}$ — S6

$C'_{eme}^{j}$ — S5

$C_{rec,i}, C_{eme}^{j}$ — S4

**Fig. 3**

**Fig. 4**

**Fig. 5**

Epoque (30 s)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2914430

**Littérature non-brevet citée dans la description**

- **K. CHEN ; Y. GAO.** Real-time Precise Point Positioning Using Single Frequency Data. *Ion GNSS 18th International Technical Meeting of the Satellite Division,* 13 Septembre 2005
- **P. HÉROUX.** Products and Applicationsfor Precise Point Positioning - Moving Towards Real-Time. *ION GNSS 17th International Technical Meeting of the Satellite Division,* 21 Septembre 2004

- **D. LAURICHESSE ; F. MERCIER.** Integer Ambiguity Resolution on Undifferenced GPS Phase Measurements and its Application to PPP. *Proceedings of ION GNSS 2007,* 839-848